# EUROPEAN PATENT SPECIFICATION

(11) **EP 2 899 817 B1**
(45) Date of publication and mention of the grant of the patent: **31.10.2018**
(21) Application number: 14152134.4
(22) Date of filing: 22.01.2014
(51) Int. Cl.: H02B 11/127, H02B 1/36, H01H 3/58

(54) **Insertion frame for an electric switching device and insertion device**
Einführungsrahmen für eine elektrische Schaltvorrichtung und Einführungsvorrichtung
Cadre d'insertion pour dispositif de commutation électrique et dispositif d'insertion

(43) Date of publication of application: 29.07.2015
(73) Proprietor: Siemens Aktiengesellschaft, 80333 München (DE)
(72) Inventor: Dostal, Ladislav, 56401 Zamberk (CZ); Jerabek, Lukas, 56401 Zamberk (CZ)

(56) References cited:
- EP-A2- 1 914 853
- DE-A1-102007 024 977
- US-A- 4 396 813

## Description

The present invention is directed to an insertion frame for a switching device. The invention is further directed to an insertion device comprising such an insertion frame and such a switching device.
Electric switching devices, such as circuit breakers, have the task to decouple one or several consumer appliances from a power supply network when a particular error occurs.
A typical error is the occurrence of a short circuit current. Circuit breakers are adapted to move a contact element in response to such a short-circuit current, thereby disconnecting a consumer appliance from the power supply network.
The invention is directed in particular to an insertion frame for a switching element in the form of a low voltage rack power switch. Voltages of up to 1000 Volts are considered "low voltages" according to the invention.
It is known to integrate a switching device for easy and quick assembly or disassembly into an insertion frame with an adapter socket. This allows for an easy and releasable connection of a power switch to a line of an electric power supply network.
A crank may be used to move the switching device within a guiding of the insertion frame in order to connect or disconnect the switching device to or from the respective adapter socket. Usually, the switching device may be moved by use of the crank to two or three different predefined positions: a connected position, in which it is fully connected to the adapter socket; a disconnected position, in which it is at least partly electrically disconnected from the adapter socket; and, where applicable, a test position, which is usually located between the connected and the disconnected positions in respect of the movement of the switching device.

DE 10 2012 203 469 A1 discloses an insertion frame for an electric switching device. The insertion frame includes a spindle, which is integrated into the insertion frame, and which is used to transform the rotational movement of the crank into a translational movement of a guiding frame, which holds the switching device. A hexagonal shaped front end section of the crank engages in a respective hexagonal recession of a head section of the spindle in order to transmit torque. The head section is provided with a projection, which is used as a bedstop element, abutting against a respective bedstop element of the insertion frame as soon as the guiding frame has reached a predefined position, which represents the connected state of the switching device. The two bedstop elements prevent a further rotation of the crank after reaching the connected state of the switching device, thereby avoiding damage to the switching device and/or the adapter sockets. Nevertheless, due to the considerable force a user may exert onto the crank, the bedstop elements and the parts of the insertion frame into which the bedstop elements are integrated need to be designed quite rigid, thereby leading to a relatively high weight of the insertion frame and high production costs for the insertion frame.

US 4 396 813 A discloses a circuit interrupter switchgear including a drawout unit mounted within an enclosure and operable between engaged and disengaged positions by means of a drive means having a two-way position actuated drive clutch. The position actuated drive clutch has an engaging means that is responsive to a sensing means for selectively engaging and disengaging a torque source with the drive means according to predetermined positions of the drawout unit.

The objective of the present invention is to provide such an insertion frame at relative low costs and/or having a relative low weight.
This objective is achieved by an insertion frame for an electric switching device according to claim 1. An insertion device combining such an insertion frame and an electric switching device is subject matter of claim 7. Further features and details of the invention are subject of the other claims and/or emerge from the description and the figures.

The invention is based on the idea that it is be possible to avoid a rigid design of the bedstop elements and the parts of the insertion frame incorporating the bedstop elements, if an ongoing force or torque exerted by a user via a crank to a transforming element (the spindle in the insertion frame according to DE 10 2012 203 469 A1) after the guiding frame as reached its predefined position is not supported internally of the insertion frame. Rather, the invention aims at decoupling an ongoing rotation of the crank (and thus the torque exerted on it) from the spindle.

Accordingly, an insertion frame for an electric switching device having the features of claim 1 is provided.

Advantageously, the clutch is designed to be decoupled automatically when the guiding frame reaches at least one, preferably either one of two, three or more predefined positions. Those two or more, in particular three positions may represent a connected state, a disconnected state, and, if applicable, a test state of a switching device, which is attached to the guiding frame of the insertion frame, thereby forming an insertion device according to the invention.

An advantageous embodiment of the insertion frame according to the invention is characterized by the clutch being decoupled automatically in either of the two directions of rotation of first clutch segment (respectively of the crank).
This will allow a halt of the guiding frame in the (several) predefined position(s) irrespective of the direction of movement. In particular, the guiding frame may automatically stop in either of the two or three positions corresponding to the connected state, the disconnected state and, if applicable, the test state of the switching device(whereas the position corresponding to the test state may advantageously be situated between the other two positions). This halt is irrespective of whether the guiding frame travels from the predefined position representing the disconnected state to the predefined position representing the connected state or vice versa.
It may be advantageous to design the insertion frame such that it is possible or necessary to remove the crank from at least the first clutch segment and, possibly, from the whole insertion frame in order to bring the clutch back into a coupleable (not necessarily but possibly a coupled) state.
For example, removing the crank from the insertion frame may lead to a movement of a locking element away from a blocking position, this movement of the locking element allowing an anew coupling of the clutch.

According to the invention, the clutch is designed to be decoupled (and preferably coupled again) by an axial movement of the first clutch segment relative to the second clutch segment. This relative axial movement of the first and second clutch segments for decoupling is achieved by a relative rotational movement of two parts of the clutch, said relative rotational movement being along a sliding face, which has an inclined alignment with respect to the directions of the axial movement and the relative rotational movement. This provides for an advantageous implementation of the coupling and decoupling functionality into the clutch. In particular, in the coupled state of the clutch, at least one engagement projection of the first or second clutch segment may engage into a respective recess of the other clutch segment, thereby providing a form-fitting connection between the two clutch segments. The relative axial movement of the two clutch segments may lead to a disengagement of the engagement projection from the recess, thereby dissolving the form-fitting connection.

According to the invention, the clutch comprises a clutch lever being positioned between the first and second clutch segments, whereas the clutch lever is moveable along the sliding face from a first position to a second position and vice versa. The first and section clutch segments are coupled in the first position of the clutch lever and are decoupled in the second position of the clutch lever. The use of such a clutch lever allows for a design of the clutch in which the first clutch segment may freely rotate relatively to the second clutch segment, due to the clutch lever preventing a new coupling as long as it is positioned in its second position.
The (limited) rotation of the clutch lever relative to the clutch segment comprising the sliding face and thus the movement from its first to its second position along the sliding face may be achieved by the clutch lever abutting on a bedstop of the insertion frame, while the first and second clutch segments are still rotatable by the crank. The clutch lever would therefore stop while the clutch segment comprising the sliding face will rotate further for a limited extend, this leading to the clutch lever being moved from its first to its second position..
A specific embodiment of an insertion frame according to the invention will be explained in more detail with reference to the accompanying drawings. The drawings show in
FIG. 1: the insertion frame in a first situation;
Fig. 2: the insertion frame in a second situation;
Fig. 3: the insertion frame in a third situation;
Fig. 4: a lever element and a part of a locking frame of the insertion frame;
Fig. 5: a clutch of the insertion frame in a first situation;
Fig. 6: the clutch in a second situation;
Fig. 7: the clutch in a third situation;
Fig. 8: the clutch in a fourth situation;
Fig. 9: the clutch in a fifth situation;
Fig. 10: the clutch in a sixth situation;
Fig. 11: a first clutch segment of the clutch;
Fig. 12: a second clutch segment of the clutch; and
Fig. 13: a clutch lever of the clutch.

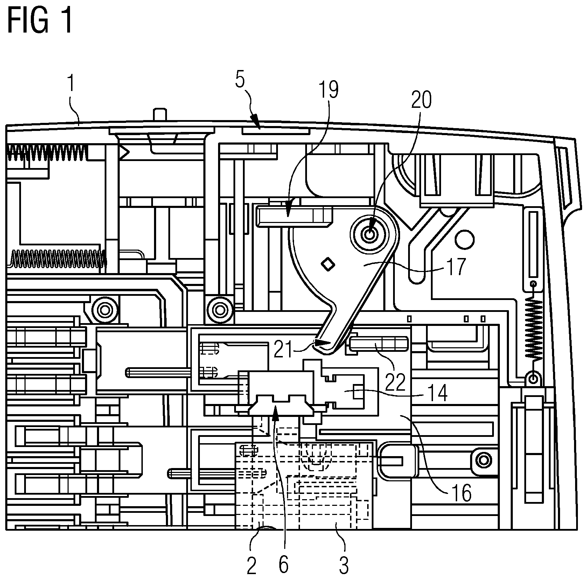

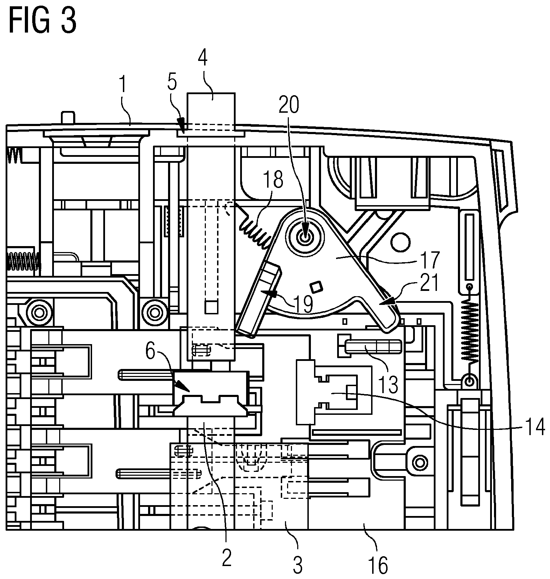

Figs. 1 to 3 show an insertion frame for an electric switching device (not shown) in different situations. The insertion frame may be part of an insertion device, comprising another insertion frame (not shown), which is located in parallel relationship in a distance from the insertion frame shown in the figures. The space formed between the two insertion frames is used to accept the electric switching device. Fig.1 shows the side of the insertion frame facing the other insertion frame respectively the electric switching device. The shown insertion frame may include all the elements used to move the switching device and to indicate its status, whereas the other insertion frame may have only a guiding function.

The insertion frame shown in Figs. 1 to 3 comprises a housing 1, which houses a transformation element in the form of a spindle 2. The spindle 2 is rotatably supported within the housing 1. A rotation of the spindle 2 will be transformed into a translational movement of a guiding frame 3. When a switching device is inserted manually into the space formed between the two insertion frames, it will connect to the guiding frame 3. A translational movement of the guiding frame 3 will therefore lead to a respective translational movement of the switching device. This is used to move the switching device from a disconnected position, which is the position in which the switching device may be inserted into or taken from the insertion device, via a test position into a connected position, in which the switching device is fully connected to an electric system or network, or vice versa.

Rotation of the spindle 2 may be achieved by a crank 4 which is inserted into a reception opening 5 of the housing 1 and which may be connected in a torque proof manner to the spindle 2. This connection is achieved by a clutch 6 (shown schematically in Figs. 1 to 3).

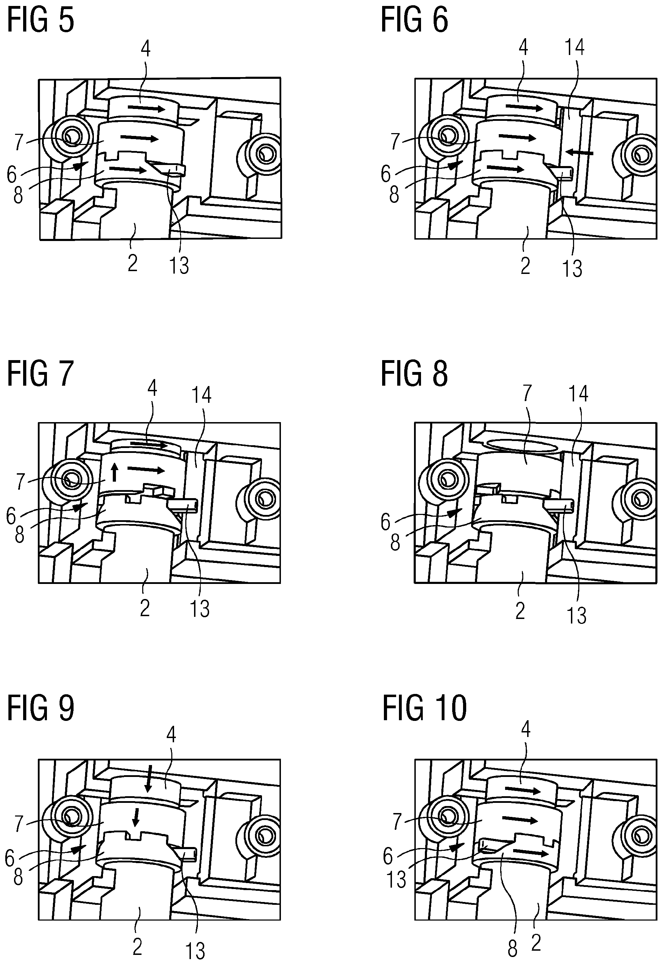

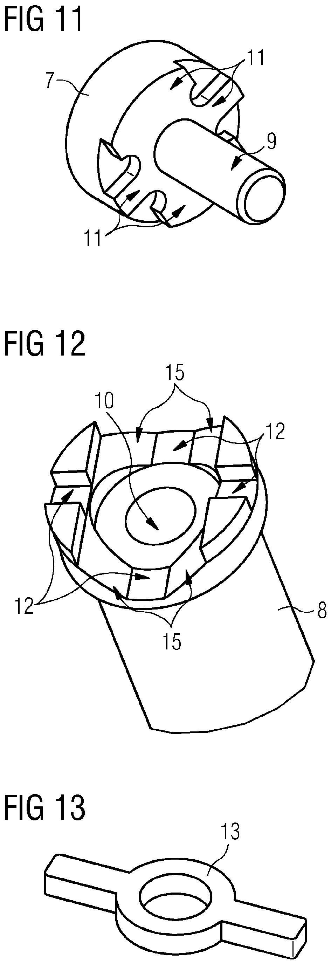

The clutch 6, which is shown in detail in Figs. 5 to 13, comprises a first clutch segment 7, which has a hexagonal recess, into which a hexagonal end section of the crank 4 may engage. Thus, a transmission of torque from the crank 4 to the first clutch segment 7 is possible.

The clutch 6 further comprises a second clutch segment 8, which is firmly and thus in a torque proof manner attached to the spindle 2.

The first clutch segment 7 comprises a plunger section 9, which is axial movably received in an axial bore 10 of the second clutch segment 8. The plunger section 9 received in the bore 10 allows for a (limited) axial movement of the two clutch segments 7, 8 relative to each other. A first axial relative position of the two clutch segments 7, 8 represents the coupled state of the clutch 6. In this coupled state, locking projections 11 of the first clutch segment 7 engage into respective locking recesses 12 of the second clutch segment 8, thereby connecting both clutch segments 7, 8 in a torque proof manner. A second relative axial position, in which the two clutch segments 7, 8 are further distanced from each other, represents the decoupled state of the clutch 6. In this decoupled state, the locking projections 11 are disengaged from the locking recesses 12, thus allowing a free rotation of the first clutch segment 7 relative to the second clutch segment 8. Accordingly, an ongoing rotation of the crank 4 will not lead to a rotation of the spindle 2 and thus to a translational movement of the guiding frame 3 respectively the switching device.
Moving the first clutch segment 7 from the first relative axial position to the second relative axial position is achieved by means of a clutch lever 13, which is positioned in-between the two clutch segments 7, 8. The clutch lever comprises two arms, which extend over the circumference of the two clutch segments 7, 8. Thus, each of the two arms may abut against a bedstop, i.e. a locking element 14 in its blocking position (cf. Figs. 1 and 6 to 8). If the clutch lever 13 abuts against the locking element 14, its rotational movement is blocked, while the two clutch segments 7, 8 are still rotatable by the crank. This creates a rotational movement of the clutch lever 13 relative to the first and second clutch segments 7, 8, thereby moving each of the arms of the clutch lever 13 along one of two inclined surface 15 of the second clutch segment 8 from a first position to a second position. This leads to the clutch lever 13 being moved (also) in an axial direction relative to the second clutch segment 8. As the first clutch segment 7 abuts on the clutch lever 13, it is moved in an axial direction relative to the second clutch segment 8 as well, and is thus brought into the second relative axial position of the two clutch segments 7, 8, in which the clutch 6 is decoupled.

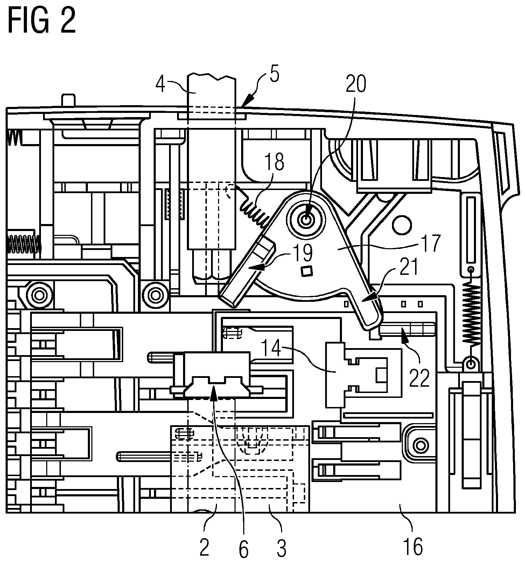

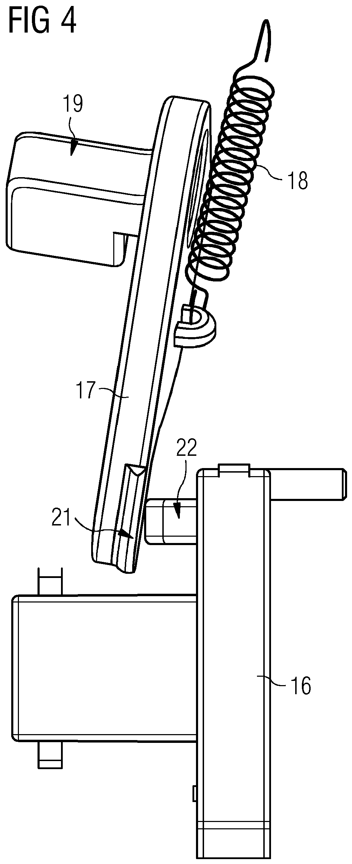

Returning the first clutch segment 7 into the first relative axial position and thus coupling the clutch 6 again is achieved by an axial force imparted by the crank 4 onto the first clutch segment 7, while the clutch lever 13 is free to move back from its second position to its first position.
This is the case if the locking element 14 is withdrawn from its blocking position (cf. Fig. 2, 3, 5, 9, and 10). As long as the locking element 14 is withdrawn from its blocking position, the guiding frame 3 and thus the electric switching device may be moved by a rotational action of the crank.
The movement of the switching device is automatically stopped by a decoupling of the clutch 6 in each of three predefined positions of the guiding frame 3. Those three predefined positions of the guiding frame 3 represent the disconnected state, the test state, and the connected state of the switching device. This automatic decoupling of the clutch 6 is achieved by an interaction of the guiding frame 3 and a locking frame 16, to which the locking element 14 is connected.
The locking frame 16 and thus the locking element 14 are movable in a direction perpendicular to the moving direction of the guiding frame 3 between a locking and an unlocking position. This movement is only possible in each of the three predefined positions of the guiding frame 3. A spring (not shown) moves the locking frame 16 from its unlocking to its locking position, if the guiding frame 3 is situated in either one of its three predefined positions. Moving the locking frame from its locking to its unlocking position may be achieved by means of a lever element 17, which is biased by a spring element 18 (cf. Fig. 4) into a first position (cf. Fig. 1). In this first position, a first contact section 19 of the lever element 17 reaches into a path the crank 4 takes when it is inserted into the housing 1 in order to engage in the first clutch segment 7. Inserting the crank 4 will lead to the first contact section 19 of the lever element 17 being pushed away, this leading to the lever element 17 rotating about a rotation axis 20. Due to this rotating movement and a contact of a second contact section 21 of the lever element 17 with a contact section 22 of the locking frame 16, the locking frame 16 is moved from its locking position to its unlocking position. Fig. 2 shows a situation in which the locking frame 16 has already reached its unlocking position, but the lever element 17 has not reached its end position. This end position is reached by a further pushing action of the crank 4, leading to the second contact section 21 of the lever element 17 to pass over the contact section 22 of the locking frame 16. This is possible due to a ball-bearing of the lever element 17, allowing the lever element 17 to swivel also about any axis perpendicular to its rotation axis 20 (cf. Fig. 4). As the second contact section 21 of the lever element 17 has passed over the contact section 22 of the locking frame 16, the lever element 17 will not interfere with a movement of the locking frame 16 from its unlocking position to its locking position.
An insertion of the switching device into the insertion device until it reaches its connected state is achieved as follows:
The switching device is manually inserted into the insertion device, which is possible only, if the guiding frame 3 is in its first predefined position, which represents the disconnected position of the switching element. Following, the crank 4 is inserted into the insertion frame, leading to the locking frame 16 being moved from its locking position to its unlocking position. In the unlocking position, the locking element 14 is withdrawn from its blocking position and thus from a possible abutment with the arms of the clutch lever 13. Thus, an axial force exerted by the crank 4 ensures that the clutch 6 is in its coupled state and a rotation of the crank 4 is transmitted to the spindle 2. A rotation of the crank 4 will therefore lead to a translational movement of the guiding frame 3 (and of the switching device) until it reaches a second predefined position, which represents the test state of the switching device. In this second predefined position, the locking frame 16 will be moved by the action of the spring into its locking position. An ongoing rotation will lead to an abutment of an arm of the lever element 13 on the locking element 14, this leading to a decoupling of the clutch 6, as it has been described before. Due to the decoupled clutch 6, a rotation of the crank 4 will not be transmitted to the spindle 2 anymore. Thus, a torque exerted onto the crank 4 is not supported by the clutch 6 anymore. The parts involved may therefore be designed relatively fragile, which enables a quite light and cheap design of the insertion frame.

In order to move the guiding frame 3 (and the switching device) from the second to a third predefined state, the crank 4 is removed from the insertion frame. This allows the lever element 17 to rotate back to its first position, thereby passing with its second contact section 21 over the contact section 22 of the locking frame again.

Reinsertion of the crank 4 into the insertion frame will move the locking frame 16 into its unlocking position again. The clutch 6 may therefore rotate freely in its coupled position until the guiding frame 3 has reached its third predefined position, where the clutch will be decoupled again automatically. In this third predefined position, the switching device is in its connected state.

In order to remove the switching device from the insertion device, the above described procedure is repeated with an opposite direction of the rotation of the crank 4. Thus, the guiding frame 3 is moved by the action of the crank 4 from its third predefined position to its second predefined position (and thus the switching device from its connected state to its test state). This will lead to an automatic decoupling of the clutch 6. After a removal and a reinsertion of the crank 4, the guiding frame 3 may be moved from its second predefined position to its first predefined position (and the switching device from its test to its disconnected state) by a further rotational action of the crank 4. In the first predefined position of the guiding frame 3, the switching device may be removed manually from the insertion device.

### Reference signs list

- 1: housing
- 2: spindle
- 3: guiding frame
- 4: crank
- 5: reception opening
- 6: clutch
- 7: first clutch segment
- 8: second clutch segment
- 9: plunger section
- 10: bore
- 11: locking projections
- 12: locking recesses
- 13: clutch lever
- 14: locking element
- 15: inclined surfaces
- 16: locking frame
- 17: lever element
- 18: spring element
- 19: first contact section
- 20: rotation axis
- 21: second contact section
- 22: contact section

## Claims

1. Insertion frame for an electric switching element, said insertion frame including a guiding frame (3) and a transmission element, whereas the transmission element is designed to engage with an end section of a crank (4) and whereas the transmission element is designed to transform a rotation of the crank (4) into a translational movement of the guiding frame (3), having a clutch (6) having a first clutch segment (7), which is designed for torque proof engagement with the end section of the crank (4), and a second clutch segment (8), which is connected in a torque proof manner to the transmission element, whereas the first clutch segment (7) and the second clutch segment (8) are designed to be either in a coupled or decoupled state,
wherein the clutch (6) is designed to be decoupled by an axial movement of the first clutch segment (7) and the second clutch segment (8) relative to each other,
wherein the relative axial movement of the first clutch segment (7) and the second clutch segment (8) is achieved by a relative rotational movement of two parts of the clutch (6), said relative rotational movement being guided by a sliding face (12), which has an inclined alignment with respect to the directions of the axial and the rotational movements,
**characterized in that**
the clutch (6) comprises a clutch lever (13) being positioned between the first clutch segment (7) and the second clutch segment (8), whereas the clutch lever (13) is moveable along the sliding face from a first position to a second position and vice versa, whereas the first clutch segment (7) and the second section clutch segment (8) are connected in a torque proof manner in the first position of the clutch lever (13) and are not connected in a torque proof manner in the second position of the clutch lever (13).

2. Insertion frame according to claim 1, **characterized in that** the clutch (6) is decoupled automatically when the guiding frame (3) reaches a predefined position representing the disconnected state, the test state, or the connected state of the switching device, the automatic decoupling of the clutch (6) being achieved by an interaction of the guiding frame (3) and a locking frame (16), to which a locking element (14) is connected, said locking frame (16) and said locking element (14) being movable in a direction perpendicular to the moving direction of the guiding frame (3) between a locking and an unlocking position.

3. Insertion frame according to claim 2, **characterized in that** automatic decoupling is achieved in either of the two directions of rotation of the first clutch segment (7) by moving the locking frame (16) from its locking to its unlocking position by means of a lever element (17) which is biased by a spring element (18) into a first position wherein a first contact section (19) of the lever element (17) reaches into a path the crank (4) takes when it is inserted into the housing (1) in order to engage in the first clutch segment (7), wherein inserting the crank (4) will lead to the first contact section (19) of the lever element (17) being pushed away leading to the lever element (17) rotating about a rotation axis (20) due to this rotating movement and a contact of a second contact section (21) of the lever element (17) with a contact section (22) of the locking frame (16), the locking frame (16) is moved from its locking position to its unlocking position.

4. Insertion frame according to claim 3, **characterized in that** the clutch (6) is designed to be brought into a coupleable state by a removal of the crank (4) from the first clutch segment (7) by allowing the lever element (17) to rotate back to its first position thereby passing with its second contact section (21) over the contact section (22) of the locking frame (16).

5. Insertion frame according to claim 1, **characterized in that** the clutch lever (13) is movable from the first position to the second position by abutting on a bedstop of the insertion frame while the first clutch segment (7) and the second clutch segment (8) are rotatable by the crank.

6. Insertion frame according to claim 2 or one of the preceding claims depending on claim 2, **characterized in that** there are two, three or more predefined positions, in each of which the clutch (6) is automatically decoupled.

7. Insertion device including an insertion frame according to one of the preceding claims and an electric switching element attached to the guiding frame (3) of the insertion frame.

## Patentansprüche

1. Einführungsrahmen für ein elektrisches Schaltelement, wobei dieser Einführungsrahmen einen Führungsrahmen (3) und ein Übertragungselement aufweist, wobei das Übertragungselement dafür ausgebildet ist, mit einem Endabschnitt einer Kurbel (4) in Eingriff zu gelangen, und wobei das Übertragungselement dafür ausgebildet ist, eine Rotation der Kurbel (4) in eine Translationsbewegung des Führungsrahmens (3) umzuwandeln, eine Kupplung (6) aufweisend, die ein erstes Kupplungssegment (7) aufweist, welches für einen drehfesten Eingriff mit dem Endabschnitt der Kurbel (4) ausgebildet ist, und ein zweites Kupplungssegment (8), welches drehfest mit dem Übertragungselement verbunden ist, wobei das erste Kupplungssegment (7) und das zweite Kupplungssegment (8) dafür ausgebildet sind, sich entweder in einem gekuppelten oder einem entkuppelten Zustand zu befinden,
wobei die Kupplung (6) dafür ausgebildet ist, durch eine axiale Bewegung des ersten Kupplungssegments (7) und des zweiten Kupplungssegments (8) relativ zueinander entkuppelt zu werden,
wobei die relative axiale Bewegung des ersten Kupplungssegments (7) und des zweiten Kupplungssegments (8) durch eine relative Drehbewegung von zwei Teilen der Kupplung (6) bewirkt wird, wobei diese relative Drehbewegung durch eine Gleitfläche (12) geführt wird, welche eine geneigte Ausrichtung bezüglich der Richtungen der axialen Bewegung und der Drehbewegung aufweist,
**dadurch gekennzeichnet, dass**
die Kupplung (6) einen Kupplungshebel (13) umfasst, der zwischen dem ersten Kupplungssegment (7) und dem zweiten Kupplungssegment (8) positioniert ist, wobei der Kupplungshebel (13) entlang der Gleitfläche von einer ersten Position zu einer zweiten Position und umgekehrt bewegbar ist, wobei das erste Kupplungssegment (7) und das zweite Kupplungssegment (8) in der ersten Position des Kupplungshebels (13) drehfest verbunden sind und in der zweiten Position des Kupplungshebels (13) nicht drehfest verbunden sind.

2. Einführungsrahmen nach Anspruch 1, **dadurch gekennzeichnet, dass** die Kupplung (6) automatisch entkuppelt wird, wenn der Führungsrahmen (3) eine vordefinierte Position erreicht, die den getrennten Zustand, den Testzustand oder den verbundenen Zustand der Schaltvorrichtung repräsentiert, wobei das automatische Entkuppeln der Kupplung (6) durch eine Interaktion des Führungsrahmens (3) und eines Verriegelungsrahmens (16), mit welchem ein Verriegelungselement (14) verbunden ist, bewirkt wird, wobei dieser Verriegelungsrahmen (16) und dieses Verriegelungselement (14) in einer Richtung, die zu der Bewegungsrichtung des Führungsrahmens (3) senkrecht ist, zwischen einer Verriegelungs- und einer Entriegelungsposition bewegbar sind.

3. Einführungsrahmen nach Anspruch 2, **dadurch gekennzeichnet, dass** das automatische Entkuppeln in einer der zwei Drehrichtungen des ersten Kupplungssegments (7) durch Bewegen des Verriegelungsrahmens (16) aus seiner Verriegelungs- in seine Entriegelungsposition mittels eines Hebelelements (17) bewirkt wird, welches durch ein Federelement (18) in eine erste Position vorgespannt wird, in der ein erster Kontaktabschnitt (19) des Hebelelements (17) in einen Weg hineinreicht, dem die Kurbel (4) folgt, wenn sie in das Gehäuse (1) eingesetzt wird, um in das erste Kupplungssegment (7) einzugreifen, wobei das Einsetzen der Kupplung (4) dann dazu führt, dass der erste Kontaktabschnitt (19) des Hebelelements (17) weggeschoben wird, was dazu führt, dass sich das Hebelelement (17) um eine Drehachse (20) dreht und infolge dieser Drehbewegung und eines Kontakts eines zweiten Kontaktabschnitts (21) des Hebelelements (17) mit einem Kontaktabschnitt (22) des Verriegelungsrahmens (16) der Verriegelungsrahmen (16) aus seiner Verriegelungsposition in seine Entriegelungsposition bewegt wird.

4. Einführungsrahmen nach Anspruch 3, **dadurch gekennzeichnet, dass** die Kupplung (6) dafür ausgebildet ist, durch ein Entfernen der Kurbel (4) von dem ersten Kupplungssegment (7) in einen kuppelbaren Zustand gebracht zu werden, indem dem Hebelelement (17) ermöglicht wird, sich zurück in seine erste Position zu drehen, wobei es sich mit seinem zweiten Kontaktabschnitt (21) über dem Kontaktabschnitt (22) des Verriegelungsrahmens (16) vorbeibewegt.

5. Einführungsrahmen nach Anspruch 1, **dadurch gekennzeichnet, dass** der Kupplungshebel (13) aus der ersten Position in die zweite Position bewegbar ist, indem er an einem Anschlag des Einführungsrahmens zur Anlage kommt, während das erste Kupplungssegment (7) und des zweite Kupplungssegment (8) mittels der Kurbel drehbar sind.

6. Einführungsrahmen nach Anspruch 2 oder einem der vorhergehenden Ansprüche, die von Anspruch 2 abhängig sind, **dadurch gekennzeichnet, dass** zwei, drei oder mehr vordefinierte Positionen vorhanden ist, in welchen die Kupplung (6) jeweils automatisch entkuppelt wird.

7. Einführungsvorrichtung, welche einen Einführungsrahmen nach einem der vorhergehenden Ansprüche und ein elektrisches Schaltelement, das an dem Führungsrahmen (3) des Einführungsrahmens befestigt ist, aufweist.

## Revendications

1. Cadre d'insertion destiné à un élément de commutation électrique, ledit cadre d'insertion comprenant un cadre de guidage (3) et un élément de transmission, alors que l'élément de transmission est conçu pour venir en prise avec une section d'extrémité d'une manivelle (4), et alors que l'élément de transmission est conçu pour transformer une rotation de la manivelle (4) en un mouvement de translation du cadre de guidage (3), possédant un embrayage (6) ayant un premier segment d'embrayage (7), qui est conçu pour une mise en prise à l'épreuve du couple avec la section d'extrémité de la manivelle (4), et un second segment d'embrayage (8), qui est connecté d'une manière à l'épreuve du couple à l'élément de transmission, alors que le premier segment d'embrayage (7) et le second segment d'embrayage (8) sont conçus pour être soit dans un état accouplé, soit dans un état désaccouplé,
dans lequel l'embrayage (6) est conçu pour être désaccouplé par un mouvement axial du premier segment d'embrayage (7) et du second segment d'embrayage (8) l'un par rapport à l'autre,
dans lequel le mouvement axial relatif du premier segment d'embrayage (7) et du second segment d'embrayage (8) est obtenu par un mouvement de rotation relatif de deux parties de l'embrayage (6), ledit mouvement de rotation relatif étant guidé par une face coulissante (12), qui présente un alignement incliné par rapport aux directions des mouvements axiaux et de rotation,
**caractérisé en ce que**
l'embrayage (6) comprend un levier d'embrayage (13) qui est positionné entre le premier segment d'embrayage (7) et le second segment d'embrayage (8), alors que le levier d'embrayage (13) est mobile le long de la face coulissante d'une première position à une seconde position et vice versa, alors que le premier segment d'embrayage (7) et le second segment d'embrayage (8) de section sont connectés d'une manière à l'épreuve du couple dans la première position du levier d'embrayage (13) et ne sont pas connectés d'une manière à l'épreuve du couple dans la seconde position du levier d'embrayage (13).

2. Cadre d'insertion selon la revendication 1, **caractérisé en ce que** l'embrayage (6) est désaccouplé automatiquement lorsque le cadre de guidage (3) atteint une position prédéfinie représentant l'état déconnecté, l'état de test ou l'état connecté du dispositif de commutation, le désaccouplage automatique de l'embrayage (6) étant obtenu par une interaction du cadre de guidage (3) et d'un cadre de verrouillage (16), auquel un élément de verrouillage (14) est relié, ledit cadre de verrouillage (16) et ledit élément de verrouillage (14) étant mobiles dans une direction perpendiculaire à la direction de déplacement du cadre de guidage (3) entre une position de verrouillage et une position de déverrouillage.

3. Cadre d'insertion selon la revendication 2, **caractérisé en ce que** le désaccouplage automatique est obtenu dans l'une quelconque des deux directions de rotation du premier segment d'embrayage (7) en déplaçant le cadre de verrouillage (16) de sa position de verrouillage à sa position de déverrouillage grâce à un élément de levier (17) qui est sollicité par un élément de ressort (18) dans une première position dans laquelle une première section de contact (19) de l'élément de levier (17) s'engage dans une trajectoire empruntée par la manivelle (4) lorsqu'elle est insérée dans le boîtier (1) afin de venir en prise dans le premier segment d'embrayage (7), dans lequel insérer la manivelle (4) mènera à la première section de contact (19) de l'élément de levier (17) qui est poussé à l'écart pour mener à l'élément de levier (17) qui tourne autour d'un axe de rotation (20) grâce à ce mouvement de rotation et à un contact d'une seconde section de contact (21) de l'élément de levier (17) avec une section de contact (22) du cadre de verrouillage (16), le cadre de verrouillage (16) étant déplacé de sa position de verrouillage à sa position de déverrouillage.

4. Cadre d'insertion selon la revendication 3, **caractérisé en ce que** l'embrayage (6) est conçu pour être amené dans un état pouvant être accouplé par une suppression de la manivelle (4) du premier segment d'embrayage (7) en permettant à l'élément de levier (17) de revenir à sa première position, ce qui permet de faire passer sa seconde section de contact (21) sur la section de contact (22) du cadre de verrouillage (16).

5. Cadre d'insertion selon la revendication 1, **caractérisé en ce que** le levier d'embrayage (13) est mobile de la première position à la seconde position en venant buter sur un butoir de lit du cadre d'insertion pendant que le premier segment d'embrayage (7) et le second segment d'embrayage (8) peuvent être tournés par la manivelle.

6. Cadre d'insertion selon la revendication 2 ou l'une des revendications précédentes dépendant de la revendication 2, **caractérisé en ce qu'**il existe deux, trois ou davantage de positions prédéfinies, dans chacune desquelles l'embrayage (6) est désaccouplé automatiquement.

7. Dispositif d'insertion comprenant un cadre d'insertion selon l'une des revendications précédentes et un élément de commutation électrique fixé au cadre de guidage (3) du cadre d'insertion.
